# EUROPÄISCHE PATENTSCHRIFT

(11) **EP 0 497 076 B1**
(45) Veröffentlichungstag und Bekanntmachung des Hinweises auf die Patenterteilung: **17.05.1995**
(21) Anmeldenummer: 91710001.8
(22) Anmeldetag: 31.01.1991
(51) Int. Cl.: B64F 5/00

(54) **Enteisungsgerät für Luftfahrzeuge**
Apparatus for de-icing aircrafts
Appareil de dégivrage pour avions

(43) Veröffentlichungstag der Anmeldung: 05.08.1992
(73) Patentinhaber: DOLL FAHRZEUGBAU GMBH, D-77728 Oppenau (DE)
(72) Erfinder: Eckenfels, Josef, W-7604 Appenweier 2 (DE)
(74) Vertreter: Hansmann, Axel, Dipl.-Wirtsch.-Ing.

(56) Entgegenhaltungen:
- EP-A- 0 358 586
- FR-A- 1 447 284
- GB-A- 822 811
- GB-A- 2 202 503
- US-A- 4 723 733
- US-A- 4 826 107

## Beschreibung

Enteisungsgeräte für Luftfahrzeuge dienen dazu, deren Oberflächen von bereits angesetztem Schnee und Eis zu befreien bzw. für eine gewisse Zeit neuen Schnee- und Eisansatz zu verhindern.

Dies geschieht je nach Ausgangszustand durch das Aufsprühen lediglich von erwärmtem Wasser oder einem Gemisch von Wasser und Enteisungs-Vereisungs-Verhinderungsmittel (EVM). Dabei wird das Mischungsverhältnis der beiden Stoffe sowie deren Temperatur der vorhandenen Situation angepaßt, insbesondere muß bei den dabei normalerweise herrschenden Außentemperaturen weit unter dem Gefrierpunkt dafür gesorgt werden, daß die Vorratsbehälter, die das Wasser sowie das EVM enthalten, ausreichend aufgeheizt werden, um ein Gefrieren im Vorratsbehälter zu verhindern.

Derartige Enteisungsgeräte sind bisher beispielsweise auf festen zivilen oder militärischen Flughäfen im Einsatz, wobei das Enteisungsgerät meist auf einem LKW-Fahrgestell fest aufgebaut und durch den Antriebsmotor des LKWs mit Energie, Hydraulikmedium und elektrischem Strom versorgt wird.

Die auszubringenden Stoffe werden über eine Sprühlanze auf die Oberfläche des Flugzeuges aufgebracht, wobei ein Bediener die Sprühlanze führt und zum Erreichen auch der Oberseiten der Flugzeuge sich in einem Arbeitskorb befindet, der meist über einen teleskopierbaren Kranarm in Position gebracht werden kann. Das Gerät zur Führung oder Abstützung des Arbeitskorbes ist dabei vom Enteisungsgerät getrennt.

Es besteht nun das Problem, Luftfahrzeuge auch auf nicht fest eingerichteten Flugplätzen, beispielsweise provisorisch eingerichteten Militärflugplätzen oder Behelfsflugplätzen, zu enteisen. Hierzu könnten die bisher bekannten, auf einem LKW montierten Enteisungsgeräte lediglich auf dem Landweg durch den LKW selbst dorthin transportiert werden, wobei dann zusätzlich noch eine entsprechende Hubeinheit oder Arbeitsplattform für den Bediener vorhanden sein muß. Dies ist in den meisten Fällen aus zeitlichen Gründen nicht möglich und überdies sind die bisherigen Enteisungsgeräte sehr teuer.

In der GB-A-822811 wird bin Enteisungsgerät mit einer Heizungsanlage, einem Tank- und Rohrleitungssystem für ein erstes und ein zweites Fluid, wobei das erste Fluid eine Enteisungschemikalie ist, einer Sprühlanze, einem selbsttragenden Rahmen, innerhalb dessen das Enteisungsgerät untergebracht ist, einem Verbrennungsmotor als Energieversorgungseinheit sowie einem Generator, der mit dem Verbrennungsmotor gekoppelt ist, beschrieben.

Es ist daher die Aufgabe der vorliegenden Erfindung, ein kleines, leichtes, leicht zu reparierendes und zu transportierendes Enteisungsgerät zu schaffen, welches zusätzlich durch genaue Einstellbarkeit des Mischungsverhältnisses sowie der Arbeitstemperatur und dadurch verringerten Austrag des Mediums wirtschaftlich und umweltfreundlich arbeitet. Weiterhin muß ein derartiges Enteisungsgerät leicht zu einem Arbeitsgerät zu ergänzen sein, mit dem ohne Fremdaggregate ein Luftfahrzeug enteist werden kann.

Diese Aufgabe ist durch die kennzeichnenden Merkmale des Anspruchs 1 gelöst. Vorteilhafte Ausbildungen sind in den Unteransprüchen gekennzeichnet.

Um möglichst unabhängig einsetzbar zu sein, ist das Enteisungsgerät in einem selbsttragenden Rahmen untergebracht, wodurch die einzelnen Komponenten leicht zugänglich und austauschbar sind. Zusätzlich ist ein Transport dadurch erleichtert, daß lediglich Befestigungsmöglichkeiten des Rahmens zum Transportgerät gegeben sein müssen, da sämtliche Einzelkomponenten innerhalb des Rahmens befestigt sind.

Das Enteisungsgerät ist ohne externe Energiequellen einsetzbar, da es einen Verbrennungsmotor mit Kraftstofftank als Energielieferanten besitzt, über den einerseits eine Hydraulikpumpe zur Erzeugung der hydraulischen Energie, mittels der Ventile etc. innerhalb des Enteisungsgerätes betätigt werden, betrieben wird als auch ein Generator zur Erzeugung des für die vorhandene elektronische Steuerung notwendigen Stromes.

Auch die Aufheizung des auszubringenden Wassers bzw. des EVM geschieht durch Verbrennung von Primärenergie, die vorzugsweise aus dem Kraftstofftank zur Versorgung des Verbrennungsmotors entnommen wird. Durch unterschiedliche Entnahmepunkte ist bei Leerung des Kraftstoffbehälters Priorität für die Versorgung des Motors mit Kraftstoff sichergestellt.

Der Rahmen ist mit leicht abklappbaren und gut isolierten Wänden beplankt, um bei Temperaturen unter dem Gefrierpunkt die durch den Verbrennungsmotor erzeugte Abwärme innerhalb des Enteisungsgerätes zu halten und dadurch Wasser und EVM in den Voratsbehältern bereits vorzuheizen bzw. am Vereisen zu hindern. Erst wenn diese Art der Erwärmung nicht mehr ausreichend ist, werden die Vorratsbehälter für Wasser und EVM mittels Wärmetauscher über einen Zwischenkreislauf, der durch den dieselbetriebenen Sturzbrenner erwärmt wird, aufgeheizt. Bei einem solchen Sturzbrenner ist der Flammenverlauf im wesentlichen senkrecht von oben nach unten, wobei sich im Bereich der Flammen Heizschlangen des Zwischenkreislaufes befinden, die jedoch auch so geschaltet werden können, daß sie nicht die Vorratsbehälter mittels des geschlossenen Kreislaufs aufheizen, sondern direkt von dem auszubringenden Wasser durchlaufen werden.

Auch der Kraftstoff-Filter in der Rohrleitung zur Versorgung des Motors bzw. Brenners kann in die Beheizung einbezogen werden.

Um sicherzustellen, daß auch solche EVM's verwendet werden können, die unter Einwirkung von Scherkräften ihre innere Struktur für den Anwendungszweck nachteilig verändern, wie etwa das Mittel AEA Typ II, von Firma Hoechst, sind alle Rohrleitungen, Verschraubungen und Ventile, durch die EVM fließen kann, mit großen Innenrundungen und keinen scherenden Innenkanten ausgestattet.

Aus dem gleichen Grund beträgt der Rohrleitungsdurchmesser mindestens 30 mm und die minimale Krümmung einer Rohrleitung 100 mm im Radius.

Auch bei der Auswahl weiterer Komponenten ist auf die Tatsache einer geringen Scherfähigkeit des EVM Rücksicht zu nehmen:
Als Pumpen sind Exzenter-Schneckenpumpen verwendet, mit jeweils einer Excenterwelle, die in Richtung des freien Endes der Excenterwelle fördert und vom gegenüberliegenden Ende her angetrieben wird. Der Zulauf erfolgt im Bereich des Antriebes der Welle um 90° gedreht in das Innere des Pumpengehäuses. Der Stator besteht meist aus Kunststoff und ist nachstellbar. Das Pumpengehäuse ist beheizbar, um eine Vereisung des zu fördernden Mediums zu verhindern.

Als Ventile sind 3/2-Wegekolbenventile verwendet, bei denen sich die Einlaßöffnung und die in Ruhestellung offene Auslaßöffnung gegenüberstehen, also im geradlinigen Durchflußverlauf liegen. Getrennt werden die beiden durch eine schräge Zwischenwand, in welcher ein senkrecht zur normalen Flußrichtung beweglicher Ventilkörper eine Öffnung verschließen und dadurch den Abfluß in die andere Abflußrichtung unter 90° - Umlenkung freigeben kann.

Als Rückschlagventile sind Kegelsitzventile verwendet, deren Ventilsitze und Ventilkörper in der geraden Durchflußöffnung angeordnet sind, in welcher auch der Ventilkörper bewegbar ist. Dadurch wird die Durchflußrichtung des Mediums nur sehr gering beeinflußt.

Auch der in der Sprühlanze im ringförmigen Austrittskanal angeordnete Drallkörper, der mehrere Leitbleche aufweist, ist durch Abrundung aller Kanten der Leitbleche im Hinblick auf eine möglichst geringe Scherung des Autragsmediums verändert.

Der Innendurchmesser der verwendeten Rohrleitungen beträgt mindestens 30 mm, und deren geringster Krümmungsradius mindestens 100 mm.

Das gesamte Enteisungsgerät wird von einer speicherprogrammierbaren (SPS)-Steuerung überwacht und geregelt.

Das Mischungsverhältnis des auszutragenden Mediums aus Wasser und EVM kann in Stufen gewählt werden, vorzugsweise

| **Wasser** | **EVM** |
|---|---|
| 100 % | 0 % |
| 70 % | 30 % |
| 50 % | 50 % |
| 0 % | 100 %. |

Das vorgewählte Mischungsverhältnis wird dadurch eingehalten, daß der Massendurchsatz hinter jeder Pumpe gemessen wird. Die für jede Mischungsstufe grob festgelegte Drehzahl jeder der beiden Pumpen kann dadurch innerhalb sehr kurzer Zeit nochmals genau nachgeregelt werden, so daß innerhalb von etwa 5 Sek. nach Einstellung eines neuen Mischungsverhältnisses dieses Mischungsverhältnis exakt ausgebracht wird. Das Vorliegen des wahlgerechten Mischungsverhältnisses wird darüber hinaus durch verschiedenfarbige Signalleuchten angezeigt.

Die schnelle Nachregelung eines neu eingestellten Mischungsverhältnisses erhöht die Wirtschaftlichkeit und Umweltfreundlichkeit des Enteisungsgerätes, da ansonsten über eine längere Zeit, in der das Mischungsverhältnis noch nicht wahlgerecht vorliegt, nutzlos Material ausgetragen werden muß. Für die Steuerung des Gerätes werden mindestens folgende Parameter überwacht und auch an dem auf der Seite des Enteisungsgerätes angebrachten Bedienfeld angezeigt:
- Füllstand der beiden Vorratsbehälter und des Kraftstofftankes,
- Temperatur in den beiden Vorratsbehältern und im Hydraulikkreislauf,
- Öldruck, Betriebstemperatur und Betriebsstundenzahl desVerbrennungsmotors,
- Anzeige eines Füllvorganges eines der Vorratsbehälter,
- Anzeige eines Heizvorganges eines der beiden Vorratsbehälter.

Ein solches Enteisungsgerät kann aufgrund seiner Unterbringung innerhalb eines selbsttragenden Rahmens über entsprechende Befestigungsmöglichkeiten am Rahmen sehr leicht mittels Kran verladen und mittels spezieller Container-Schnellverschlüsse an den unteren Ecken des Rahmens auf einem Fahrgestell oder einer Transporteinheit befestigt werden.

Wenn die Beplankung der im wesentlichen ebenen Oberseite des Enteisungsgerätes zusätzlich ausreichend tragfähig ausgebildet und mit einem umlaufenden Schutzgitter versehen ist, so kann diese Oberseite direkt als Arbeitsplattform für den Bediener dienen, der von hier aus die Sprühlanze führt. Er gelangt auf die Oberseite mittels einer fest an einer Außenseite des Enteisungsgerätes befestigten Leiter.

Das Enteisungsgerät steht dabei vorzugsweise auf einem nicht selbstverfahrenden Fahrgesstell, welches lediglich durch seine Deichsel über die Grundfläche des Enteisungsgerätes hinausragt. Für den Wechsel der Bewegungsrichtung dieses Fahrgestells muß keine Rückfahrsperre etc. bedient werden. Durch diese Ausbildung, bei der zusätzlich die Signalleuchten für die wahlgerechte Mischung des Austragsmediums von der Arbeitsplattform aus sichtbar sein müssen, ist das Enteisungsgerät zu einem Arbeitsgerät ergänzt, welches durch ein Schleppfahrzeug, einen Gabelstapler oder ähnliches lediglich in Position gebracht werden muß, und dann ohne Fremdaggregate, fremde Energieversorgung etc. selbständig eingesetzt werden kann.

Zusätzlich ist das Enteisungsgerät in seinen Maßen und seinem Gewicht so ausgelegt, daß es in den Laderäumen von Transportflugzeugen, insbesondere der "Transall" der Bundeswehr, untergebracht, gesichert und transportiert werden kann. Die Abmessungen betragen daher ca. 4,62 m X 1,89 m X 2,85 m / 1,95 m (Höhe) mit/ohne Fahrgestell und das Gewicht maximal ca. 4200 kp mit und ca 3500 kp ohne Fahrgestell.

Eine Ausführungsform gemäß der Erfindung ist im folgenden anhand der Figuren beispielhaft näher dargestellt. Es zeigen
- Fig. 1: eine perspektivische Darstellung des Arbeitsgerätes,
- Fig. 2: eine schematische Darstellung einer Pumpe des Enteisungsgerätes,
- Fig. 3: eine schematische Darstellung des Düsenkopfes mit dem Drallkörper,
- Fig. 4: eine Schnittdarstellung der verwendeten 3/2-Wegeventile,
- Fig. 5: eine Schnittdarstellung der verwendeten Rückschlagventile und
- Fig. 6: eine Schnittdarstellung der verwendeten Verschraubungen.

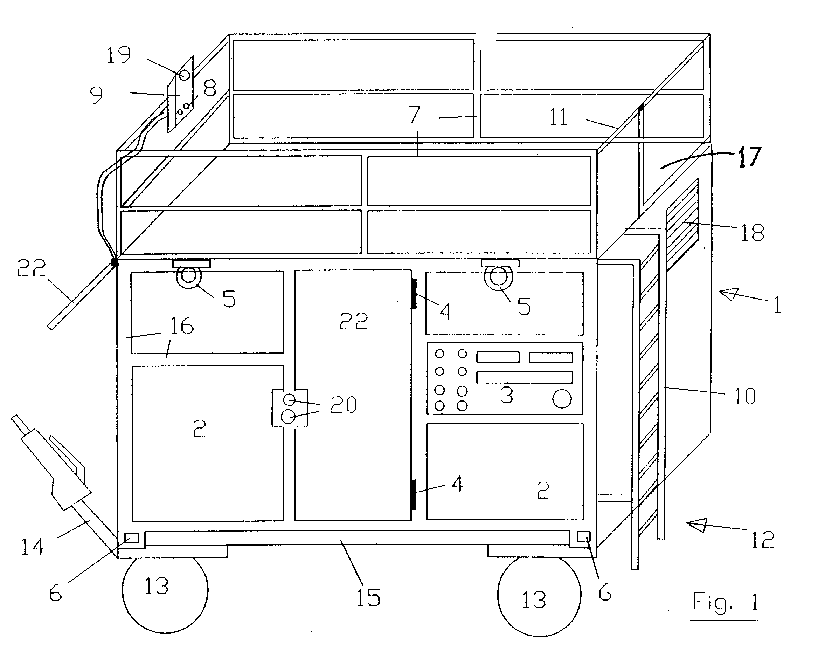

Fig. 1 zeigt eine perspektivische Darstellung eines Enteisungsgerätes 1, welches auf einem Fahrgestell 12 mittels Container-Schnellverschlüssen 6 befestigt ist.

Von dem Enteisungsgerät 1 ist in Fig. 1 lediglich der Rahmen 16 zu erkennen, welcher nach außen durch die entfernbaren Wände 2 bzw. bewegliche Klappen 22 verschlossen ist. Die Klappen 22 sind dabei um Scharniere 4 senkrecht oder waagerecht verschwenkbar, um die im Rahmen untergebrachten Baugruppen des Enteisungsgerätes inspizieren und warten zu können.

Neben einer mittleren, senkrechten Klappe 22 ist die linke Seitenfläche des Enteisungsgerätes 1 durch vier weitere einzelne Wände 2 beplankt.

Die Wand vor dem Bedienfeld 3 ist bereits entfernt, wie es beim Arbeitseinsatz des Gerätes notwendig ist. Ferner ist eine Ausnehmung für die beiden Signalleuchten 8 zu erkennen, die durch unterschiedliche Farbe die wahlgerechte Einstellung des Medienaustrags anzeigen. Auf der Rückseite des Enteisungsgerätes 1 ist ferner das Lüftungsgitter 18 zu erkennen, über welches Luft zugeführt wird.

Eine Klappe 22 an der Vorderseite des Enteisungsgerätes 1 ist in geöffneter Position dargestellt.

Das Enteisungsgerät 1 ist auf dem Chassis 15 des Fahrgestells 12 aufgesetzt und befestigt, an welchem wiederum die Räder 13 befestigt sind. Die Vorderräder sind dabei an einer lenkbaren Achse befestigt, an welcher die Deichsel 14 angreift. Das Fahrgestell 12 kann ohne Betätigung einer Rückfahrsperre oder ähnlichem in wechselnden Richtungen bewegt werden.

Die Beplankung der Oberseite 17 ist so stabil ausgeführt, daß das Bedienungspersonal diese als Arbeitsplattform verwenden kann. Zu diesem Zweck ist die Oberseite 17 an ihren Außenkanten mit einem Geländer 7 ausgestattet, welches etwa 1 m hoch ist und der Sicherung des Bedienungspersonales dient.

Mittels einer an der Rückseite des Enteisungsgerätes 1 befestigten Leiter ist der Aufstieg auf die Oberseite 17 möglich, wozu eine Sperre 11 an der entsprechenden Stelle des Geländers 7 entfernt werden muß, um in das Innere des Geländers zu gelangen. Am Geländer ist ferner ein zusätzliches Bedienfeld 9 zu sehen, welches wiederum zwei Signalleuchten 8 sowie einen Wählschalter 19 zum Einstellen des Mischungsverhältnisses aufweisen.

Auf der Seite des Enteisungsgerätes sind ferner die beiden Befüllstutzen 20 zum Einfüllen von EVM und Wasser zu erkennen.

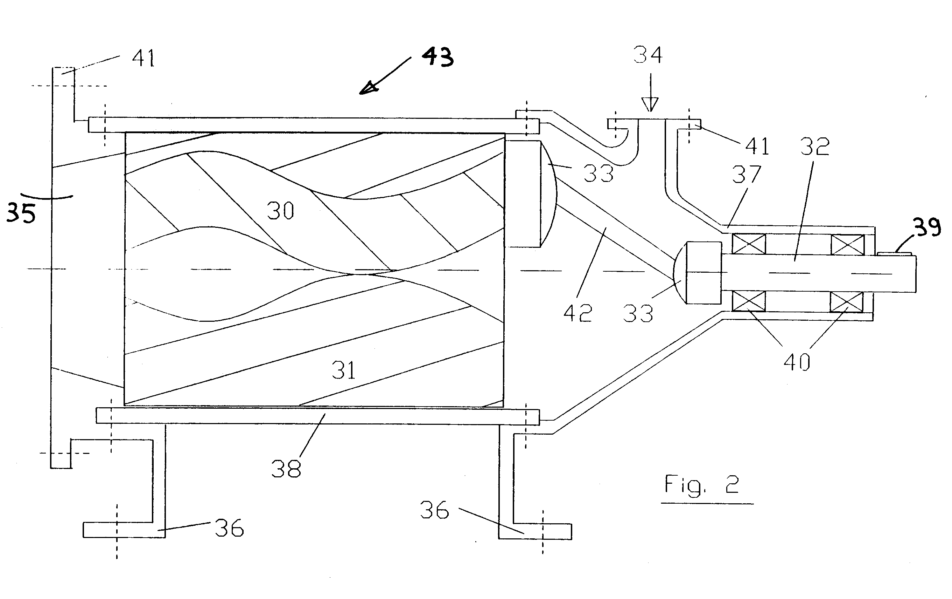

Fig. 2 zeigt eine Excenterwellenpumpe im Querschnitt, bei welcher eine etwa schlangenförmige Exzenterwelle 30 sich in einem entsprechend gestalteten Stator 31 dreht, wodurch ein in den Zwischenräumen befindliches Medium zwischen der Antriebsseite der Exzenterwelle 30 und dem gegenüberliegenden Ende zunehmend komprimiert wird, sobald sich die Exzenterwelle 30 in Drehung versetzt. Das angetriebene Ende der Exzenterwelle 30 dreht sich dabei exzentrisch und steht über ein Kardangelenk 33 mit einer zweiteiligen Antriebswelle 32 in Verbindung, deren einer Teil über Lager 40 im Gehäuse 37 der Exzenterwellenpumpe gelagert ist und mit dem freien Ende daraus hervorragt, um mittels einer Paßfeder 39 mit einem Antriebsmotor verbunden zu werden, wofür im vorliegenden Fall ein Hydraulikmotor verwendet wird.

Dieser gelagerte Teil der Antriebswelle 32 ist mit dem zweiten Teil 42 der Antriebswelle verbunden, welcher mit der Exzenterwelle gekoppelt ist. Der Zulauf 34 des Fördermediums befindet sich dabei seitlich im Bereich des zweiten Teiles 42 der Antriebswelle und strömt unter einem Winkel von etwa 90° zur Längsachse der Exzenterwellenpumpe in deren Gehäuse ein. Die Förderrichtung stimmt mit der Längsachse in etwa überein, so daß am freien Ende der Exzenterwelle 30 das Gehäuse 37 eine entsprechende Öffnung als Druckanschluß 35 aufweist, und in diesem Bereich die Stirnseite des Gehäuses 37 als Flansch 41 zur Verschraubung ausgebildet ist.

Ebenso ist auch der niederdruckseitige Zulauf 34 als Flansch 41 zur Verschraubung mit angrenzenden Aggregaten ausgestattet.

Im Bereich des Stators 31 ist das Gehäuse 37 der Pumpe 43 durch eine entfernbare Gehäuseabdeckung 38 ersetzt, die mit dem Gehäuse 37 verschraubt ist. Dadurch ist der Stator 31 zugänglich und auch einstellbar entsprechend dem Verschleiß der Exzenterwellenpumpe 43.

An der dem Zulauf gegenüberliegenden Seite weist das Gehäuse 37 ferner Laschen 36 zur Befestigung der Exzenterwellenpumpe 43 an einer größeren Baugruppe auf.

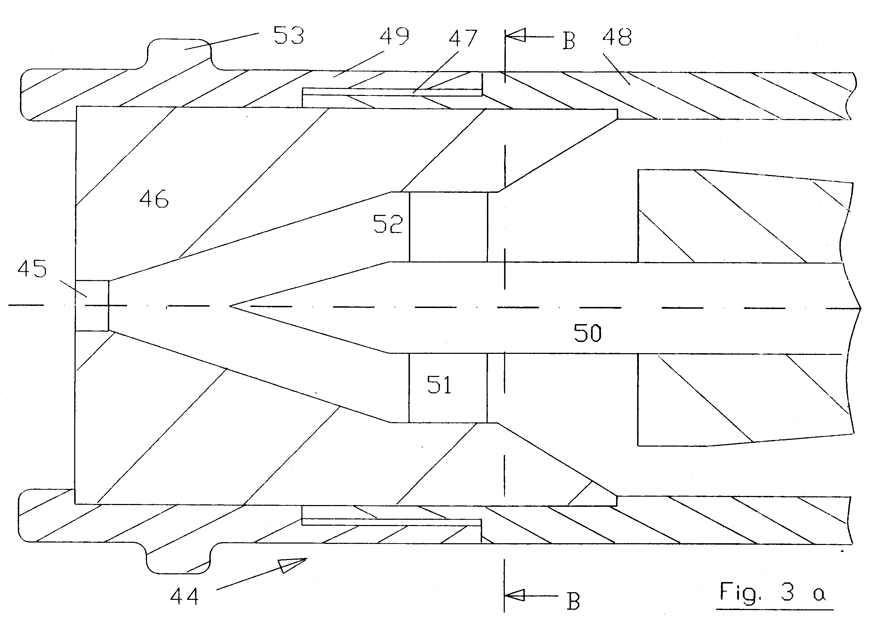

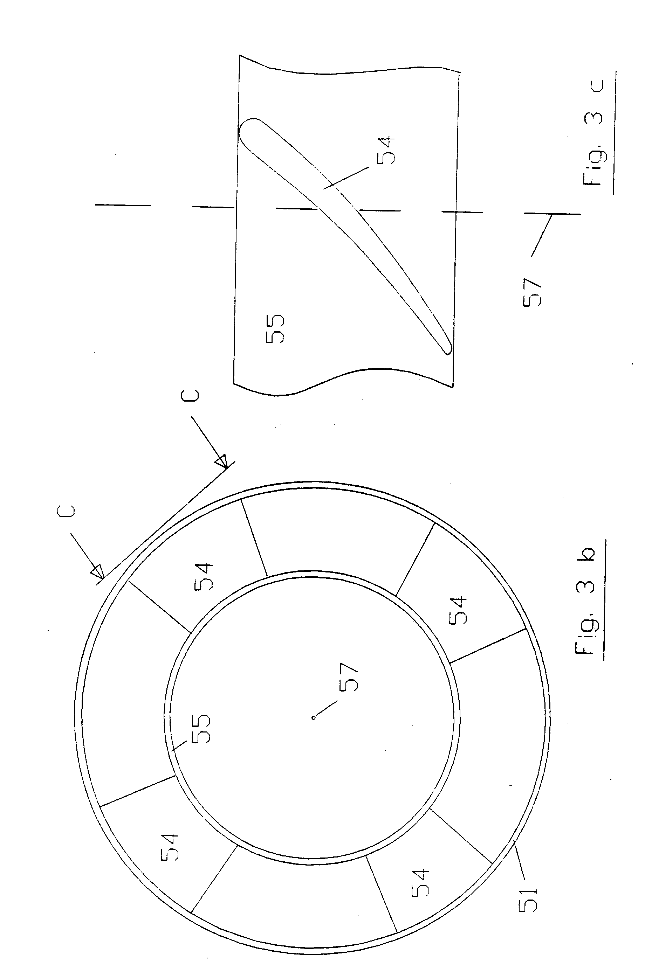

Fig. 3a zeigt das vordere Ende einer Sprühlanze 44, in deren ringförmigem Gehäuse 48 sich ein Düsenkörper 46 befindet, der das auszutragende Medium aus der Düsenöffnung 45 in der Stirnseite des Düsenkörpers austreten läßt. Der Düsenkörper 46 wird mittels eines muffenförmigen Düsenhalters 49 im Gehäuse 48 gehalten, welcher über ein Gewinde 47 mit dem Gehäuse 48 verschraubt ist. Zur besseren Handhabung befinden sich auf dem Außenumfang des Düsenhalters 49 Nasen 53.

Im Inneren des Düsenkörpers 46 erweitert sich die Düsenöffnung 45 in Strömungsrichtung nach hinten konisch, anschließend in einem größeren zylindrischen Bereich und danach wiederum konisch bis annähernd auf den Innendurchmesser des Gehäuses 48. In die Öffnung des Düsenkörpers 46 ragt der stiftförmige Zentralkörper 50 mit seinem freien Ende hinein, der entlang der Längsachse des Gehäuses 48 geführt ist. Dadurch entsteht ein ringförmiger Strömungsraum für das auszubringende Medium, wobei sich in dessen zylindrischen Bereich ein Drallkörper 51 befindet, der zur Erzeugung einer laminaren Strömung beim Austritt aus der Düse das Medium innerhalb des ringförmigen Strömungskanales in Rotation versetzen soll.

Fig. 3 b zeigt eine Ansicht des Drahllkörpers 51 gemäß der Blickrichtung B-B der Fig. 3 a.

Der Drallkörper 51 besteht aus zwei im wesentlichen konzentrischen, ringförmigen Blechen 55, zwischen denen, sozusagen als Abstandshalter, Leitbleche 54 über den Umfang verteilt angeordnet sind.

Wie Fig. 3 c zeigt, dien eine Ansicht gemäß C-C der Fig. 3 b darstellt, sind die Leitbleche 54 schräg zur Längsachse 57 des Drallkörpers 51 eingesetzt und vorzugsweise gebogen ausgebildet, wobei der Querschnitt der Leitbleche 54 sich in ihrem Verlauf ändern kann. Das parallel zur Längsachse 57 anströmende Medium wird durch diese Schrägstellung abgelenkt und hierdurch ein Drall im Ringraum des Strömungskanales erzeugt. Die Anströmkante und vorzugsweise auch die Abströmkante der Leitbleche 54 sind dabei soweit als möglich gerundet, um das Einwirken von Scherkräften auf das Austragsmedium zu vermeiden. Dabdurch ergibt sich eine annähernd halbkreisförmige Ausbildung mit unterschiedlichem Radius entsprechend der Materialstärke an den jeweiligen Enden des Querschnittes der Leitbleche 54 wie in Fig. 3 c zu erkennen.

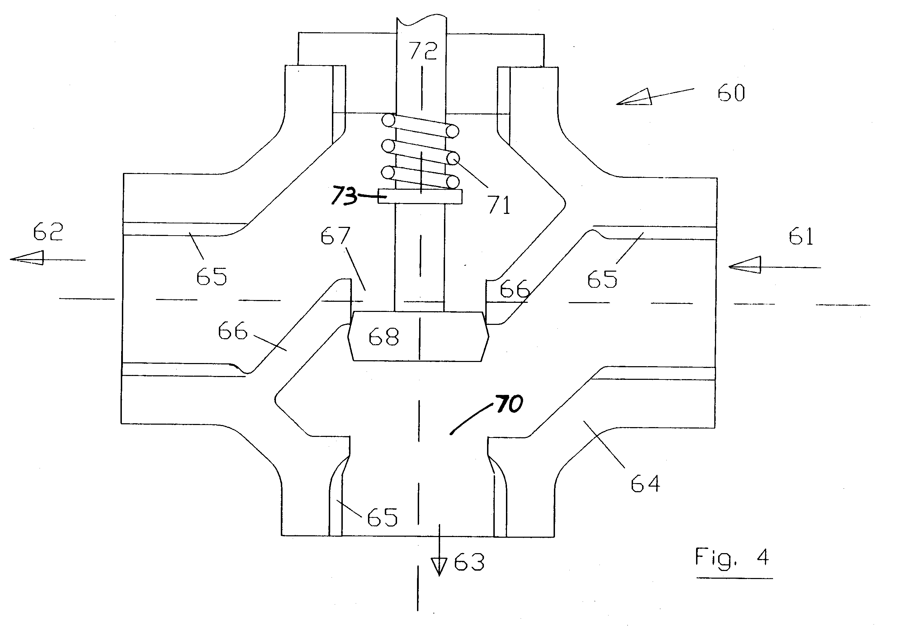

Fig. 4 zeigt ein 3/2-Wegeventil 60 im Querschnitt, wobei sich in Durchflußrichtung dem Zulauf 61 gegenüber der erste Ablauf 62 befindet, durch den das Fördermedium in der Ruhestellung das Gehäuse 64 des Ventils verläßt. Zwischen dem Zulauf 61 und dem ersten, normalen Ablauf 62 befindet sich eine schräge Zwischenwand 66, die einen zur normalen Durchflußrichtung parallelen Absatz bildet, in welchem eine Ventilöffnung 67 ausgebildet ist, die durch einen Ventilkörper 68 verschließbar ist.

Auf der gleichen Seite dieser Zwischenwand 66 wie der Ventilkörper 68 befindet sich, in einem 90°-Winkel zur normalen Durchflußrichtung der zweite Ablauf 63 mit einer weiteren Ventilöffnung 70, die ebenfalls durch den gleichen Ventilkörper 68 verschließbar ist. Zu diesem Zweck ist dieser an einer Ventilstange 72 geführt, welche von einer Feder 71 umgeben ist, welche zwischen einem mit dem Gehäuse fest verbundenen Teil und einem entsprechenden Absatz 73 des Ventilschaftes eingesetzt ist und dadurch den Ventilkörper 68 normalerweise in Anlage an der zweiten Ventilöffnung 70 hält, so daß die erste Ventilöffnung 67 zwischen dem Zulauf 61 und dem normalen ersten Ablauf 62 offen steht.

Falls der Ventilschaft 72 entgegen der Kraft der Feder 71 beaufschlagt wird, wird dadurch der normale erste Ablauf 62 verschlossen und der zweite Ablauf 63 geöffnet.

Alle Zu- und Abläufe sind mit entsprechenden Gewinden 65 zur Verschraubung mit anderen Elementen ausgestattet.

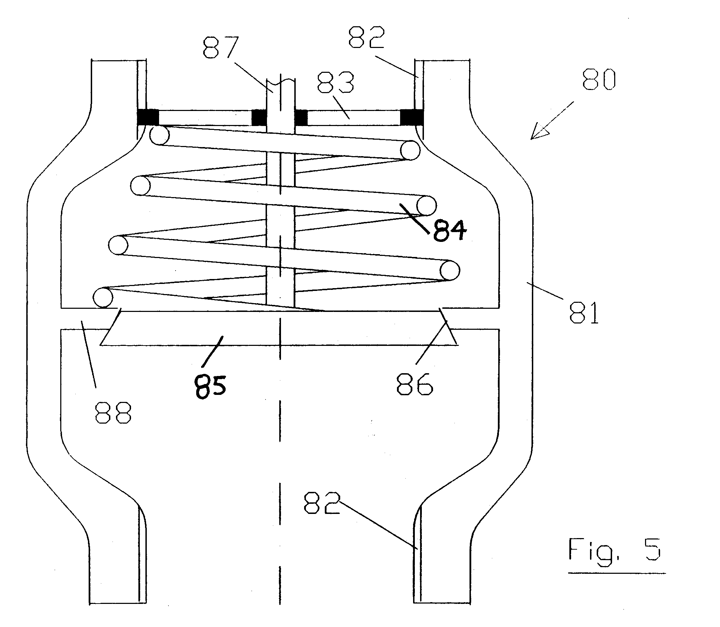

Fig. 5 zeigt einen Querschnitt durch ein Rückschlagventil 80. Dieses besitzt in seinen beiden offenen Stirnseiten Gewinde 82 zur Verschraubung mit angrenzenden Bauteilen. Quer zu der Durchflußrichtung, die von der einen Stirnseite zur anderen Stirnseite verläuft, befindet sich eine Zwischenwand mit einer koaxialen Ventilöffnung, deren konische Wände den Ventilsitz 86 darstellt. Gegen diesen wird ein entsprechend geformter Ventilkörper 85, der an einem Ventilschaft 87 befestigt ist, durch die Kraft einer Feder 84 gedrückt, die sich einerseits an der Zwischenwand 88 und andererseits an einer Druckplatte 83 abstützt, die sehr stark durchbrochen ist, und dadurch die Strömung des Mediums kaum behindert.

Beispielsweise kann diese Druckplatte eine ringförmige Gestalt mit konischem Verlauf des Innendurchmessers und einem Gewinde am Außendurchmesser bestehen, welcher lediglich eine Verstrebung zu einer zentralen Führung besitzt, in welcher der Ventilschaft geführt ist.

Durch diese Konstruktion ist bei entsprechendem Druck des Strömungsmediums der Ventilkörper 85 soweit vom Ventilsitz 86 abgehoben, daß eine weitgehend ungestörte und umlenkungsfreie Strömung des Mediums möglich ist.

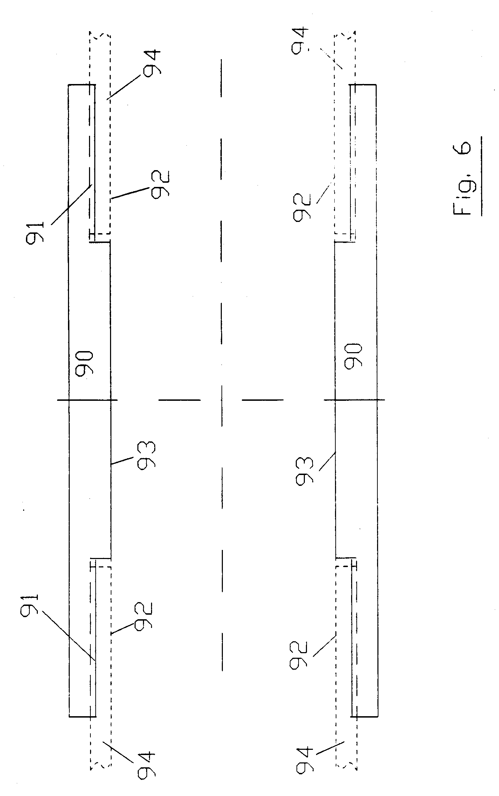

Fig. 6 zeigt eine Muffe zum Verschrauben von Rohrleitungsteilen, deren Innendurchmesser in der Nähe der freien Enden bei gleichem Außendurchmesser verringert ist und ein Innengewinde 91 aufweist.

In diese Innengewinde können entsprechende Ansatzteile wie etwa Rohrstücke 94 mit entsprechendem Außengewinde eingeschraubt werden, wobei der Innendurchmesser 93 der Muffe 90 so gewählt ist, daß nach Einschrauben der Rohrstücke 94 etc. sich innen eine fluchtende Linie mit dem Innendurchmesser 92 dieser Rohrstücke ergibt. Dadurch stehen dem Medium bei der Durchströmung der Rohrverbindung gemäß Fig. 6 keine Scherkräfte erzeugenden Kanten im Wege.

Dabei ist es unwichtig, ob es sich bei dem Teil 94 um ein einstückiges Rohrteil oder um eine keilförmige Klemmverschraubung handelt. Ebenso kann analog anstelle eines Innengewindes an der Muffe 90 ein Außengewinde verwendet werden, wobei jeweils der Effekt der durchgehenden Innenwandung ohne abscherende Kanten Bedeutung hat.

## Patentansprüche

1. Enteisungsgerät für Luftfahrzeuge mit
- einer Heizungsanlage,
- einem Tank- und Rohrleitungssystem für ein erstes und ein zweites Fluid, wobei das erste Fluid eine Enteisungschemikalie ist,
- einer Sprühlanze,
- einem selbsttragenden Rahmen (16), innerhalb dessen das Enteisungsgerät (1) untergebracht ist,
- einem Verbrennungsmotor als Energieversorgungseinheit und
- einem Generator, der mit dem Verbrennungsmotor gekoppelt ist,
**dadurch gekennzeichnet, daß**
- das zweite Fluid Wasser ist,
- eine Verkleidung vorgesehen ist, die am Rahmen (16) befestigte, isolierte und von Hand entfernbare Wände (2) beinhaltet,
- alle Rohrleitungen, Verschraubungen und Ventile, durch die auch die Enteisungschemikalie fließen kann, solche Innenrundungen und Innenkanten aufweisen, daß sichergestellt ist, daß deren Scherwirkung auf die Enteisungschemikalie die die Enteisungswirkung bedingende innere Struktur der Enteisungschemikalie nicht nachteilig verändert, und
- das Verhältnis von Wasser zu Enteisungschemikalie im auszubringenden Gemisch mittels eines Wählschalters (19) in einigen wenigen Stufen einstellbar ist.

2. Enteisungsgerät nach Anspruch 1,
**dadurch gekennzeichnet, daß** der Rahmen (16) die Außenabmessungen von 2,8 m x 2 m x 2 m nicht überschreitet und die isolierten Wände (2) vom Rahmen (16) mittels Scharniere (4) abgeklappt werden können.

3. Enteisungsgerät nach Anspruch 1 oder 2,
**dadurch gekennzeichnet, daß** Motor und Heizungsanlage aus einem gemeinsamen Kraftstofftank versorgt werden, wobei bei der Kraftstoffentnahme die Priorität dem Motor zukommt.

4. Enteisungsgerät nach einem der vorhergehenden Ansprüche,
**dadurch gekennzeichnet, daß** die Oberseite des Enteisungsgerätes im wesentlichen eben ist und eine für einen Bediener ausreichend tragfähige Beplankung aufweist.

5. Enteisungsgerät nach einem der vorhergehenden Ansprüche,
**dadurch gekennzeichnet, daß** das Enteisungsgerät (1) durch eine speicherprogrammierbare (SPS-) Steuerung gesteuert und geregelt wird und an einem Bedienfeld (3) Fehler und Informationen angezeigt werden.

6. Enteisungsgerät nach einem der vorhergehenden Ansprüche,
**dadurch gekennzeichnet, daß** das Enteisungsgerät (1) je eine Exzenter-Schneckenpumpe (43) zum Fördern von Enteisungschemikalie und Wasser aufweist, wobei die Pumpen (43) in der Förderrichtung umschaltbar sind zum Ausbringen des Mediums als auch zum Ansaugen und Befüllen der Vorratsbehälter .

7. Enteisungsgerät nach Anspruch 6,
**dadurch gekennzeichnet, daß** die Pumpen (43) hydraulisch angetrieben werden, wobei die Hydraulikquelle mit dem Verbrennungsmotor gekoppelt ist.

8. Enteisungsgerät nach Anspruch 7,
**dadurch gekennzeichnet, daß** der bzw. die Hydraulikmotoren zum Antrieb der Pumpen (43) über Proportionalventile in der Drehzahl steuerbar sind und im Austragbetrieb hinter jeder Pumpe (43) ständig der Massendurchsatz gemessen und die Drehzahl der Pumpe (42) gemäß dem gewählten Mischungsverhältnis durch die speicherprogrammierbare (SPS)-Steuerung geregelt wird.

9. Enteisungsgerät nach einem der vorhergehenden Ansprüche,
**dadurch gekennzeichnet, daß** als Ventile 3/2-Wege-Kolbenventile (60) verwendet werden, bei denen der Zulauf (61) und der in Ruhestellung geöffnete erste Ablauf (62) einander gegenüberliegen und durch eine schräge Zwischenwand (66) getrennt sind, in der ein senkrecht zur normalen Flußrichtung beweglicher Ventilkörper (68) die Ventilöffnung (70) verschließen und dadurch den zweiten Ablauf (63) freigibt.

10. Enteisungsgerät nach einem der vorhergehenden Ansprüche,
**dadurch gekennzeichnet, daß** das Enteisungsgerät (1) Rückschlagventile (80) wenigstens jeweils in den Rohrleitungen in Austragsrichtung hinter den Vorratsbehältern aufweist, bei denen es sich um Kegelsitzventile handelt, deren Ventilsitze (86) und Ventilkörper (85) in der geraden Durchflußrichtung angeordnet sind, so daß die Durchflußrichtung des Mediums im wesentlichen unverändert bleibt.

11. Enteisungsgerät nach einem der Ansprüche 6 bis 10,
**dadurch gekennzeichnet, daß** jede Exzenter-Schneckenpumpe (43) eine Excenterwelle (30) aufweist, die das Medium in Richtung der Schneckenwellen-Längsachse ausbringt und wobei der Zulauf des Mediums im Antriebsbereich der Excenterwelle (30) im rechten Winkel in das Gehäuse (37) der Pumpe (43) erfolgt und wobei das Gehäuse der Pumpe beheizbar ist und der Stator (31) der Pumpe (43) aus Kunststoff besteht und nachstellbar ist.

12. Enteisungsgerät nach einem der vorhergehenden Ansprüche,
**dadurch gekennzeichnet, daß** in der Sprühlanze verschiedene Düsenformen durch Bajonett- oder Revolveranordnung schnell in Einsatz gebracht werden können.

13. Enteisungsgerät nach Anspruch 12,
**dadurch gekennzeichnet, daß** die Sprühlanze (44) einen ringförmigen Austrittskanal aufweist, in welchem sich ein Drallkörper (51) mit mehreren Leitblechen (54) befindet, dessen Anström- und Abströmkanten soweit als möglich gerundet sind.

14. Enteisungsgerät nach einem der vorhergehenden Ansprüche,
**dadurch gekennzeichnet, daß** der Innendurchmesser (92) der Rohrleitungen des Enteisungsgerätes wenigstens 30 mm beträgt, und der mittlere Biegeradius der Rohrleitungen wenigstens 100 mm beträgt.

15. Enteisungsgerät nach einem der vorhergehenden Ansprüche,
**dadurch gekennzeichnet, daß** die SPS-Steuerung mit Sensoren zur Überwachung der folgenden Parameter ausgestattet ist, und diese Parameter am Bedienfeld (3) angezeigt werden:
- Füllstand des Kraftstoffbehälters sowie der Vorratsbehälter für Wasser und Enteisungschemikalien,
- Temperatur von Hydrauliköl sowie Wasser und Enteisungschemikalien in den Vorratsbehältern und des Verbrennungsmotors,
- Öldruck und Betriebsstundenzahl des Verbrennungsmotors,
- Vorliegen eines Füllvorgangs der Vorratsbehälter von Wasser bzw. Enteisungschemikalien,
- Vorliegen eines Heizvorganges der Vorratsbehälter für Wasser bzw. Enteisungschemikalien und
- eingestellte Stufe des Mischungsverhältnisses von Wasser zu Enteisungschemikalien.

16. Enteisungsgerät nach einem der vorhergehenden Ansprüche,
**dadurch gekennzeichnet, daß** verschiedenfarbige Signalleuchten (8) den wahlgerechten bzw. nicht wahlgerechten Austrag des Mediums anzeigen.

17. Enteisungsgerät nach einem der vorhergehenden Ansprüche,
**dadurch gekennzeichnet, daß** es sich bei dem Verbrennungsmotor um einen Dieselmotor handelt und der Brenner der Heizanlage ein dieselbefeuerter Durchlauferhitzer als Sturzbrenner ist, in dessen von oben nach unten verlaufenden Flammen sich die Heizschlangen befinden, durch welche wahlweise direkt auszubringendes Wasser geleitet werden kann oder das Wasser eines Zwischenkreislaufes, welcher über Wärmetauscher die Voratsbehälter für das EVM bzw. das auszubringende Wasser aufheizen.

18. Enteisungsgerät nach Anspruch 17,
**dadurch gekennzeichnet, daß** das Aufheizen des Vorratsbehälters bereits während des Befüllens möglich ist.

19. Arbeitsgerät zur Oberflächenbehandlung von Luftfahrzeugen mit einem Enteisungsgerät nach einem der vorhergehenden Ansprüche,
**dadurch gekennzeichnet, daß**
- das Enteisungsgerät über Container-Schnellverschlüsse an den unteren Ecken seines Rahmens mit einem Fahrgestell verbindbar ist,
- auf der Oberseite des Enteisungsgerätes ein umlaufendes Schutzgitter angeordnet ist, um die Oberseite als Arbeitsplattform zu nutzen, wobei an einer der Seiten des Arbeitsgerätes eine Leiter fest montiert ist.

20. Arbeitsgerät nach Anspruch 19,
**dadurch gekennzeichnet, daß**
- sich die Signalleuchten (8) für wahlgerechten/nicht wahlgerechten Betrieb so angeordnet sind, daß sie von einem auf der Oberseite des Arbeitsgerätes stehenden Bediener jederzeit zu erkennen sind,
- das Fahrgestell (12) im wesentlichen nur so groß ist, wie die Grundfläche des Enteisungsgerätes (1) und
- das Fahrgestell (12) keinen eigenen Antrieb, sondern lediglich eine Anhängevorrichtung aufweist.

21. Arbeitsgerät nach Anspruch 20,
**dadurch gekennzeichnet, daß** es sich bei der Anhängevorrichtung um eine Deichsel (14) mit automatischer Bremse handelt, mittels welcher das Arbeitsgerät ohne Betätigung einer Rückfahrsperre in wechselnden Fahrtrichtungen rangiert werden kann.

## Claims

1. De-icing appliance for aircraft with
- a heating system,
- a container and pipe system for a first and second fluid, the first fluid being a de-icing chemical,
- a spray lance,
- a self-supporting frame (16) within which the de-icing apparatus (1) is accommodated,
- an internal combustion engine as the energy supply unit and
- a generator which is coupled to the internal combustion engine,
**characterised** in that
- the second fluid is water,
- a panelling is provided which contains insulated walls (2), which can be removed by hand, which are fixed to the frame (16),
- all the pipes, screw connections and valves, through which the de-icing chemical can also flow, have such inner roundings and inner edges that the certainty is provided that their gravitational effect on the de-icing chemical does not detrimentally change the inner structure of the de-icing chemical responsible for the de-icing effect, and
- that the ratio of water to de-icing chemical in the mixture to be discharged can be adjusted in a very few stages by means of a selector switch (19).

2. De-icing appliance according to claim 1, **characterised** in that the frame (16) does not exceed the external dimensions of 2,8 m x 2 m x 2 m and the insulated walls (2) can be folded away from the frame (16) by means of hinges (4).

3. De-icing appliance according to claim 1 or 2, **characterised** in that engine and heating plant are supplied by a common fuel tank, in which the engine is given priority for the fuel supply.

4. De-icing appliance according to one of the preceding claims, **characterised** in that the top surface of the de-icing appliance is essentially flat and has sufficient strength to support a service person.

5. De-icing appliance according to one of the preceding claims, **characterised** in that the de-icing appliance (1) is controlled and regulated by a memory-programmable (SPS-) control, and errors and information are displayed on an operating panel.

6. De-icing appliance according to one of the preceding claims, **characterised** in that each de-icing appliance (1) has an eccentric spiral pump (43) for conveying de-icing chemical and water, in which the conveying direction of the pumps (43) can be reversed for discharging the medium as well as for taking in and filling the storage container.

7. De-icing appliance according to claim 6, **characterised** in that the pumps (43) are hydraulically driven, wherein the hydraulic source is coupled to the internal combustion engine.

8. De-icing appliance according to claim 7, **characterised** in that the speed of the hydraulic motor or motors for driving the pumps (43) can be controlled by proportional valves and that during the discharge operation after each pump (43) the mass throughput is constantly measured and the speed of the pump (42) is controlled by the memory-programmable (SPS-) control according to the mixture ratio selected.

9. De-icing appliance according to one of the preceding claims, **characterised** in that the valves used are 3/2 way piston valves (60) in which the inlet (61) and the first outlet (62), open in the rest position, are situated opposite each other and separated by a sloping separating wall (66), in which a valve body (68), which is movable perpendicular to the normal flow direction, shuts the valve opening (70) and thus opens the second outlet (63).

10. De-icing appliance according to one of the preceding claims, **characterised** in that the de-icing appliance (1) has back-pressure valves (80) at least in each of the pipes in the discharge direction behind the storage containers, the valves being bevel seat valves whose valve seats (86) and valve bodies (85) are arranged in the straight throughflow direction, so that the throughflow direction of the medium remains essentially unchanged.

11. De-icing appliance according to one of the claims 6 to 10, **characterised** in that each eccentric spiral pump (43) has an eccentric shaft (30) which discharges the medium in the direction of the longitudinal axis of the worm shaft, and in which the inlet of the medium in the drive region of the eccentric shaft (30) takes place at right angles to the housing (37) of the pump (43) and wherein the housing of the pump can be heated and the stator (31) of the pump (43) is made of plastics and can be reset.

12. De-icing appliance according to one of the preceding claims, **characterised** in that in the spraying lance different forms of nozzles can be quickly put into operation through bayonet or revolver arrangements.

13. De-icing appliance according to claim 12, **characterised** in that the spraying lance (44) has an annular outlet channel in which is located a helical body (51) with several guide vanes (54) whose flow-on and flow-off edges are as far as possible rounded off.

14. De-icing appliance according to one of the preceding claims, **characterised** in that the inner diameter (92) of the pipes of the de-icing appliance is at least 30 mm and the mean bending radius of the pipes is at least 100 mm.

15. De-icing appliance according to one of the preceding claims, **characterised** in that the SPS control is equipped with sensors for monitoring the following parameters and these parameters are displayed on the operating panel (3):
- filling level in the fuel container as well as the storage container for water and de-icing chemicals,
- temperature of hydraulic oil as well as water and de-icing chemicals in the storage containers and the internal combustion engine,
- oil pressure and operating hours of the internal combustion engine,
- filling process in progress in the storage container for water or de-icing chemicals,
- heating process in progress in the storage container for water or de-icing chemicals and
- stage selected for the mixing ratio of water to de-icing chemicals.

16. De-icing appliance according to one of the preceding claims, **characterised** in that different colour signal lamps (8) display the correctly selected or non-correctly selected discharge of the medium.

17. De-icing appliance according to one of the preceding claims, **characterised** in that the internal combustion engine is a Diesel engine and the burner of the heating plant is a Diesel oil fired flow heater operating as a reverberatory flame furnace in which through the heating coils, arranged in the flames which burn from top to bottom, water is optionally discharged directly or water of an intermediate circuit which, through heat exchangers, heat the storage containers for the EVM or the water to be discharged.

18. De-icing appliance according to claim 17, **characterised** in that the heating of the storage containers is possible even during filling.

19. De-icing appliance for the surface treatment of aircraft with a de-icing appliance according to one of the preceding claims, **characterised** in that
- the de-icing appliance can be connected to a chassis at the bottom edges of its frame via container snap closures,
- on the roof of the de-icing appliance is arranged a continuous safety rail in order for the roof to be used as a workplace, a ladder being fixed to one side of the working appliance.

20. Working appliance according to claim 19, **characterised** in that
- the signal lamps (8) for the correctly selected/non-correctly selected operation are arranged in such a way that they can be readily seen by an operating person standing on the roof of the working appliance,
- the chassis (12) essentially is only as large as the basic area of the de-icing appliance (1) and
- the chassis (12) has no independent drive, but merely a trailer connecting means.

21. Working appliance according to claim 20, **characterised** in that the trailer connecting means is a tow bar (14) with an automatic brake through which the working appliance can be shunted in different directions without operating the reverse gear lock.

## Revendications

1. Appareil de dégivrage pour aéronefs, comportant
- une installation de chauffage,
- un système de réservoirs et de conduites tubulaires pour un premier et un second fluide, le premier fluide étant un produit chimique de dégivrage,
- une lance de pulvérisation,
- un châssis autoporteur (16), à l'intérieur duquel est logé l'appareil de dégivrage (1),
- un moteur à combustion interne en guise d'unité de fourniture d'énergie, et
- un générateur, qui est accouplé au moteur à combustion interne, caractérisé
- en ce que le second fluide est de l'eau,
- en ce qu'il est prévu un capotage, qui comprend des parois (2) isolées, fixées au châssis (16) et susceptibles d'être retirées à la main,
- en ce que toutes les conduites tubulaires, les raccords et soupapes, à travers lesquels peut également s'écouler le produit chimique de dégivrage, présentent des arrondis intérieurs et des arêtes intérieures, qui sont tels, que leur action de cisaillement sur le produit chimique de dégivrage, ne modifie pas de manière préjudiciable la structure interne du produit chimique de dégivrage, qui conditionne l'effet de dégivrage, et
- en ce que le rapport de l'eau au produit chimique de dégivrage dans le mélange à distribuer peut être réglé selon un faible nombre de paliers, au moyen d'un commutateur de sélection (19).

2. Appareil de dégivrage selon la revendication 1, caractérisé en ce que le châssis (16) ne dépasse pas les dimensions extérieures de 2,8 m x 2 m x 2 m, et les parois isolées (2) peuvent être basculées par rapport au châssis (16), au moyen de charnières (4).

3. Appareil de dégivrage selon la revendication 1 ou 2, caractérisé en ce que le moteur et l'installation de chauffage sont alimentés à partir d'un réservoir de carburant commun, la priorité pour la demande en carburant étant donnée au moteur.

4. Appareil de dégivrage selon l'une des revendications précédentes, caractérisé en ce que la face supérieure de l'appareil de dégivrage est sensiblement plane et comporte un plancher suffisamment résistant pour porter un opérateur.

5. Appareil de dégivrage selon l'une des revendications précédentes, caractérisé en ce que l'appareil de dégivrage (1) est commandé et réglé par une commande à programme enregistré (SPS), et des erreurs et des informations sont visualisées sur un tableau de commande (3).

6. Appareil de dégivrage selon l'une des revendications précédentes, caractérisé en ce que l'appareil de dégivrage (1) comporte deux pompes à vis excentrique (43), l'une pour véhiculer le produit chimique de dégivrage, l'autre pour véhiculer l'eau, le sens de refoulement des pompes (43) pouvant être inversé, aussi bien pour distribuer le fluide, que pour l'aspirer et remplir les réservoirs de stockage.

7. Appareil de dégivrage selon la revendication 6, caractérisé en ce que les pompes (43) sont entraînées par voie hydraulique, la source de fluide hydraulique étant accouplée au moteur à combustion interne.

8. Appareil de dégivrage selon la revendication 7, caractérisé en ce que le ou les moteurs hydrauliques destinés à l'entraînement des pompes (43) peuvent être commandés, quant à leur vitesse de rotation, par des soupapes à action proportionnelle, et pendant le fonctionnement en mode de distribution, le débit massique est mesuré constamment en aval de chaque pompe (43) et la vitesse de rotation de la pompe (43) est réglée par la commande à programme enregistré (SPS) conformément au rapport de mélange sélectionné.

9. Appareil de dégivrage selon l'une des revendications précédentes, caractérisé en ce qu'en guise de soupapes, on utilise des distributeurs 3/2 voies à piston (60), dans lesquels l'entrée (61) et la première sortie (62) ouverte dans la position de repos, sont en regard l'une de l'autre et sont séparées par une cloison oblique (66), dans laquelle un corps d'obturation de soupape (68) mobile perpendiculairement à la direction d'écoulement normale, peut obturer l'ouverture de soupape (70) en libérant ainsi la seconde sortie (63).

10. Appareil de dégivrage selon l'une des revendications précédentes, caractérisé en ce que l'appareil de dégivrage (1) comporte, au moins dans chaque conduite tubulaire, en aval des réservoirs de stockage dans la direction de distribution, des soupapes anti-retour (80) constituées par des soupapes à siège conique, dont les sièges de soupape (86) et les corps d'obturation de soupape (85) sont agencés dans la direction de passage rectiligne de l'écoulement, de sorte que la direction de passage de l'écoulement du fluide reste sensiblement invariable.

11. Appareil de dégivrage selon l'une des revendications 6 à 10, caractérisé en ce que chaque pompe à vis excentrique (43) comporte un arbre excentrique (30), qui refoule le fluide dans la direction de l'axe longitudinal de la vis, en ce que l'arrivée du fluide dans le carter (37) de la pompe (43) s'effectue à angle droit, dans la zone d'entraînement de l'arbre excentrique (30), et en ce que le carter de la pompe peut être chauffé et le stator (31) de la pompe (43) est fabriqué en matière plastique et peut être réajusté.

12. Appareil de dégivrage selon l'une des revendications précédentes, caractérisé en ce que dans la lance de pulvérisation, différentes formes de buses peuvent être mises en service rapidement, par un système à baïonnette ou à tête rotative à indexage.

13. Appareil de dégivrage selon la revendication 12, caractérisé en ce que la lance de pulvérisation (44) présente un canal de sortie de forme annulaire, dans lequel se trouve un corps d'impulsion de rotation (51) comportant plusieurs tôles déflectrices (54), dont les bords d'attaque et les bords de fuite sont arrondis autant que possible.

14. Appareil de dégivrage selon l'une des revendications précédentes, caractérisé en ce que le diamètre intérieur (92) des conduites tubulaires de l'appareil de dégivrage, est au moins égal à 30 mm, et le rayon moyen de courbure des conduites tubulaires est au moins égal à 100 mm.

15. Appareil de dégivrage selon l'une des revendications précédentes, caractérisé en ce que la commande SPS est équipée de capteurs destinés à la surveillance des paramètres suivants, ces paramètres étant visualisés sur le tableau de commande (3):
- niveau de remplissage du réservoir de carburant ainsi que des réservoirs de stockage pour l'eau et le produit chimique de dégivrage,
- température de l'huile hydraulique ainsi que de l'eau et du produit chimique de dégivrage dans les réservoirs de stockage, et du moteur à combustion interne,
- pression d'huile et nombre d'heures de fonctionnement du moteur à combustion interne,
- présence d'une phase de remplissage des réservoirs de stockage d'eau et de produit chimique de dégivrage,
- présence d'une phase de chauffage des réservoirs de stockage pour l'eau et le produit chimique de dégivrage, et
- palier réglé pour le rapport de l'eau au produit chimique de dégivrage dans le mélange.

16. Appareil de dégivrage selon l'une des revendications précédentes, caractérisé en ce que des lampes témoins (8) de couleurs différentes indiquent si la distribution du fluide est conforme ou non conforme à la sélection effectuée.

17. Appareil de dégivrage selon l'une des revendications précédentes, caractérisé en ce que le moteur à combustion interne consiste en un moteur Diesel, et le brûleur de l'installation de chauffage est un chauffe-eau instantané à combustible Diesel, sous forme de brûleur à flammes descendantes, dans les flammes duquel, qui s'étendent du haut vers le bas, se trouvent les serpentins de chauffage à travers lesquels peut être amenée, au choix, directement l'eau devant être distribuée, ou de l'eau d'un circuit intermédiaire, qui chauffe, au moyen d'échangeurs de chaleur, les réservoirs de stockage pour le produit chimique de dégivrage et/ou pour l'eau devant être distribuée.

18. Appareil de dégivrage selon la revendication 17, caractérisé en ce que le chauffage du réservoir de stockage est déjà possible lors du remplissage.

19. Appareil d'entretien pour le traitement de surfaces d'aéronefs, comportant un appareil de dégivrage selon l'une des revendications précédentes,
caractérisé en ce que
- l'appareil de dégivrage peut être assemblé, aux coins inférieurs de son châssis, à un châssis de roulement, au moyen de raccords rapides de conteneur,
- et, sur la face supérieure de l'appareil de dégivrage, est disposé un garde-corps périphérique, pour utiliser la face supérieure en tant que plate-forme de travail, une échelle étant montée fixe, sur l'un des côtés de l'appareil d'entretien.

20. Appareil d'entretien selon la revendication 19, caractérisé en ce que
- les lampes témoins (8) indiquant le fonctionnement conforme/non conforme à la sélection effectuée, sont disposées de manière telle, qu'elles soient visibles à tout moment par un opérateur se trouvant sur la face supérieure de l'appareil d'entretien,
- le châssis de roulement (12) n'est sensiblement que de la taille de la surface au sol de l'appareil de dégivrage (1), et
- le châssis de roulement (12) ne comporte pas de système d'entraînement propre, mais uniquement un dispositif d'attelage.

21. Appareil d'entretien selon la revendication 20, caractérisé en ce que le dispositif d'attelage, consiste en un timon (14) à frein automatique, à l'aide duquel l'appareil d'entretien peut être manoeuvré dans des directions changeantes, sans actionnement d'un système de blocage de marche arrière.
